Europäisches Patentamt

European Patent Office

Office européen des brevets

(11) Veröffentlichungsnummer: **0 349 744**

**A2**

## (12) EUROPÄISCHE PATENTANMELDUNG

(21) Anmeldenummer: **89109044.1**

(22) Anmeldetag: **19.05.89**

(51) Int. Cl.4: **B01D 29/48 , B01D 29/25 , B01D 29/64**

(30) Priorität: **08.07.88 DE 3823192**

(43) Veröffentlichungstag der Anmeldung:
**10.01.90 Patentblatt 90/02**

(84) Benannte Vertragsstaaten:
**AT BE CH DE ES FR GB IT LI NL SE**

(71) Anmelder: **Hein, Lehmann Aktiengesellschaft**
**Fichtenstrasse 75**
**D-4000 Düsseldorf 1(DE)**

(72) Erfinder: **Schumann, Günter**
**Dürerstrasse 19**
**D-4044 Kaarst 2(DE)**

(74) Vertreter: **Patentanwaltsbüro Cohausz &**
**Florack**
**Schumannstrasse 97**
**D-4000 Düsseldorf 1(DE)**

(54) **Spaltrohrfilter.**

(57) Die Erfindung betrifft einen Spaltrohrfilter mit einem hohlzylindrischen Filterelement aus gebogenen Drähten, die auf senkrechten Haltestützen befestigt sind und die zwischen sich waagerechte Spalten bilden, durch die zu filternde Flüssigkeit tritt, wobei die Zylinderinnenwand des Filterelementes die dem Flüssigkeitsstrom zugekehrte Filteroberfläche bildet, die Flüssigkeit vom Innern des Filterelementes nach außen strömt und die dem Flüssigkeitsstrom zugekehrte Filteroberfläche von einer Abstreifvorrichtung überfahrbar ist, wobei an der Zylinderinnenwand 2a eine koaxiale Wendel 5 aus Bürsten anliegt, die sich relativ gegenüber dem Filterelement 2 in einer solchen Richtung dreht, daß die auf und vor der Filteroberfläche 2a befindlichen Sink- und Schwebestoffe nach unten befördert werden.

Fig. 1

EP 0 349 744 A2

## Spaltrohrfilter

Die Erfindung betrifft einen Spaltrohrfilter mit einem hohlzylindrischen Filterelement aus gebogenen Drähten, die auf senkrechten Haltestützen befestigt sind und die zwischen sich waagerechte oder annähernd waagerechte Spalten bilden, durch die zu filternde Flüssigkeit tritt, wobei die Zylinderinnenwand des Filterelementes die dem Flüssigkeitsstrom zugekehrte Filteroberfläche bildete die Flüssigkeit vom Innern des Filterelementes nach außen strömt und die dem Flüssigkeitsstrom zugekehrte Filteroberfläche von einer Abstreifvorrichtung überfahrbar ist.

Es ist bekannt, bei zylindrischen Drahtspaltfiltern die Flüssigkeit von außen nach innen oder innen nach außen fließen zu lassen und den zylindrischen Filterkorb bzw. Filtereinsatz in regelmäßigen Abständen (oder kontinuierlich) von Hand oder motorisch zu drehen, um die auf der äußeren Filteroberfläche sich abgesetzten Stoffe abzustreifen. Die Abstreifvorrichtung weist einen Schaber auf, der die Spalten des Filters zuschmieren kann und damit die Filterleistung verringert wird.

Auch werden die in der zu filternden Flüssigkeit enthaltenden Schwebstoffe nicht genügend sicher nach unten gefördert, wenn anstelle eines Schabers Bürsten vertikal angeordnet sind.

Aufgabe der Erfindung ist es, einen Spaltrohrfilter der eingangs genannten Art so zu verbessern, daß mit einfachen Mitteln eine hohe Reinigungsleistung des Filterelements erzielt wird und hierbei die Sink- und Schwebstoffe hydraulisch-mechanisch nach unten gefördert werden.

Diese Aufgabe wird erfindungsgemäß dadurch gelöst, daß an der Zylinderinnenwand eine koaxiale Wendel aus Bürsten so geführt anliegt und sich relativ gegenüber dem Filterelement in einer solchen Richtung dreht (oder steht), daß die auf und vor der Filteroberfläche befindlichen Sink-und Schwebestoffe mechanisch (hydraulisch) nach unten befördert werden.

Die sich intermittierend oder stetig drehende Bürstenwendel reinigt die zylindrische Innenseite des Filterelements, auf der sich die Sink- und Schwebstoffe absetzen, bzw. durch die Strömungsrichtung die Partikel zurückgehalten werden, mit hoher Effektivität, und es wird sicher verhindert, daß die engen Spalte sich zusetzen. Wird hierbei dafür gesorgt, daß aufgrund der Drehrichtung der Wendel die in der Flüssigkeit befindlichen Teilchen und die Flüssigkeit nach unten gefördert werden, so wird nicht nur eine hohe Filterleistung erreicht, sondern es sammelt sich der Schlamm auch im unteren Bereich, um dort leicht entfernt werden zu können. Eine solche Vorrichtung ist konstruktiv einfach, wartungsarm, von geringen Außenabmessungen und erzeugt eine gleichmäßige Verteilung des Flüssigkeitsstromes über die gesamte Filterfläche.

Besonders vorteilhaft ist es, wenn die Wendel auf einem koaxialen Hohlzylinder geringeren Durchmessers als der des Filterelementes befestigt sind, der sich relativ zum Filterelement dreht. Auch sollte an dem unteren Ende der Hohlzylinderachse eine gebogene Arme aufweisende Räumvorrichtung befestigt sein, die in einem unterhalb des Hohzylinders befindlichen Schlammauffangraum gelagert ist, der sich an der Unterseite des Ringraumes zwischen Filterelement und Hohzylinder anschließt und durch die intermittierend oder stetig drehende Räumvorrichtung in Abständen entleert werden kann, was nicht nur der wirtschaftlichen Kontinuität dient, sondern auch umweltfreundlicher Entsorgung. Hierbei können die spiralförmig gebogenen Arme der Räumvorrichtung durch die entsprechende Drehrichtung den Schlamm zum Zentrum des Auffangraumes fördern, wobei um das Zentrum der Räumvorrichtung eine ringförmige Verbindung zur unteren Schlammentnahmeöffnung herstellt. Besonders vorteilhaft ist es, wenn unterhalb der Entnahmeöffnung eine Abzugpumpe befestigt ist. Auch kann hier ein abnehmbarer Schlamm-Sammelbehälter angeschlossen werden, der über einen Sperrschieber vom Schlammauffangraum während der Entsorgung getrennt werden kann.

Auch wird vorgeschlagen, daß die Wendel motorisch angetrieben ist, so daß die Vorrichtung kontinuierlich oder intermittierend selbstätig betrieben werden kann. Eine hohe Reinigungsleistung und eine optimale Bürstwirkung bei ausreichend gründlicher und schneller Beförderung der Teilchen nach unten wird dadurch erreicht, daß die Bürsteneinheit aus mindestens einer Wendel mit einer Steigung bzw. aus zwei oder mehreren ineinander liegenden Wendeln mit mindestens je einer hohen Steigung besteht.

Um ein selbstsägis Reinigen der Bürstenbesatzer zu erreichen, wird vorgeschlagen, daß auf dem Filterrohr, oder Filterelementen Reinigungskämme zum Bürstenbesatz hin angeordnet sind. Hierdurch ist eine sichere Reinigungsfunktion der Filterspalte gewährleistet. In allen Fällen werden die durch den Reinigungsprozeß gelösten Schmutzteile wieder in den Flüssigkeitsstrom zurückgegeben und durch die wendelförmige Strömungsrichtung der Flüssigkeit hydraulisch zwangsweise weiter nach unten geführt und bis in den Schlammauffangraum (Pos. 11 Zchng.) transportiert.

Ein Ausführungsbeispiel der Erfindung ist in den Zeichnungen dargestellt und wird im folgenden

2

näher beschrieben.

Es zeigen:

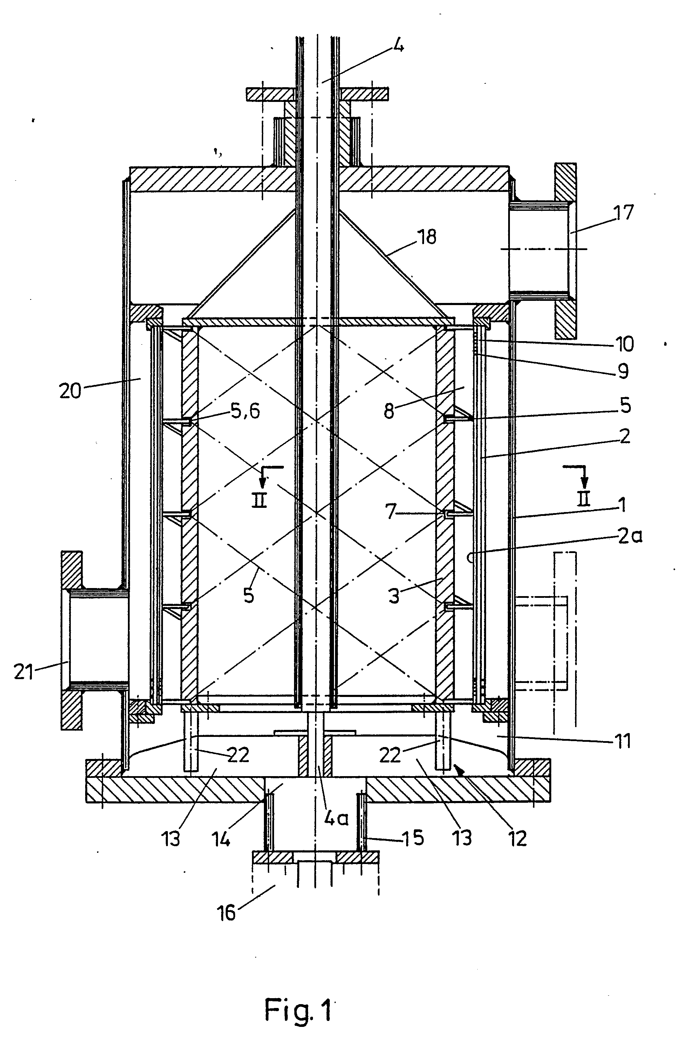

Figur 1 einen senkrechten axialen Schnitt durch die Vorrichtung,

Figur 2 einen waagerechten Schnitt durch die Vorrichtung nach II-II in Figur 1 in einem Ausschnitt und

Figur 3 einen waagerechten Schnitt durch die untere Räumvorrichtung.

In einem zylindrischen Gehäuse 1 mit senkrechter Achse ist an der Zylinderinnenwandung koaxial ein zylindrisches Filterelement 2 befestigt, das aus einem Drahtspaltfilter besteht und dessen Filteroberfläche innen liegt. Das gesamte Filterelement 2 kann einteilig oder aus mehreren Zylindersegmenten zusammengesetzt sein. Es kann aber auch nur aus einem Filterrohr bestehen. Die zwischen den Drähten befindlichen schmalen Spalte liegen im wesentlichen waagerecht, wobei vorzugsweise Spalte von 10-500 my angewendet werden.

Innerhalb des hier feststehenden Filterelements 2 ist ein Hohlzylinder 3 koaxial und drehbar gelagert, der an der Ober- und Unterseite geschlossen ist und durch den eine Achse 4 verläuft, über die der Hohlzylinder 3 motorisch angetrieben ist. Hierzu tritt die Achse 4 an der Oberseite des Gehäuses 1 aus.

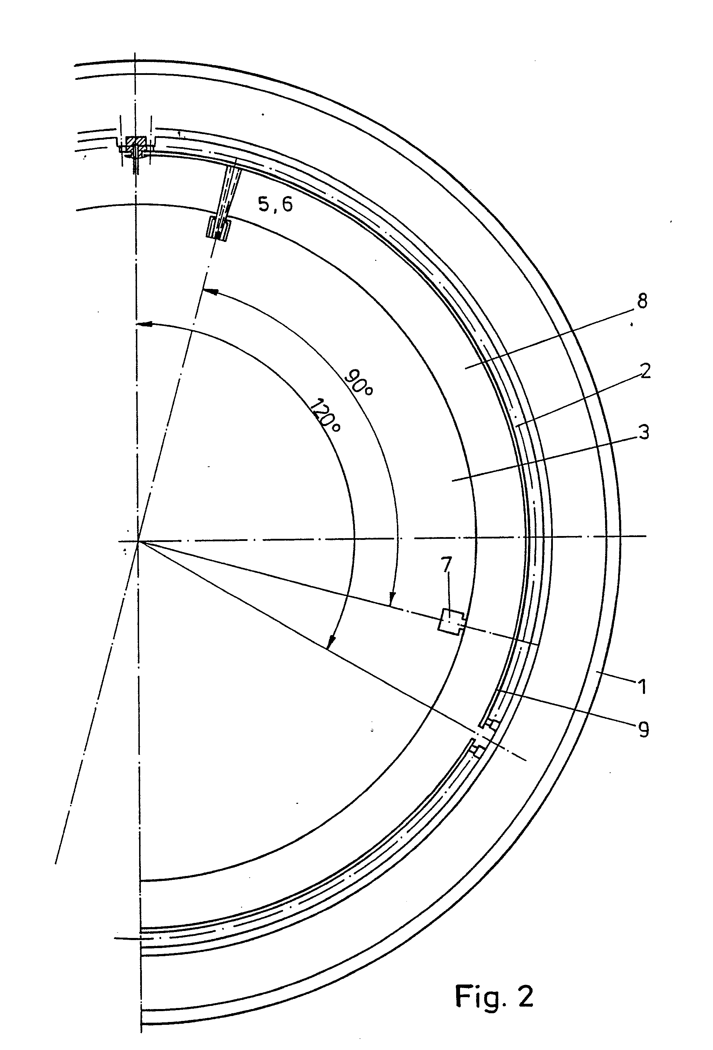

Am Außenmantel des Hohlzylinders 3 ist wendelförmig ein Bürstenbesatz 6, (vorzugsweise aus Kunststoff- oder Metallborsten) angeordnet wobei hier beispielsweise die Bürsteneinheit 5 in gleichen Abständen von 90 o am Umfang aus 4 Wendeln hoher Steigung zusammengesetzt ist, die zueinander parallel am Außenmantel entlang laufen und zwischen sich schraubenförmige Ringkanäle bilden (Figur 2). Die einzelnen Bürsten sind in Außennuten 7 des Hohlzylinders 3 befestigt.

Die einzelnen Bürstenwendel begrenzen jeweils einen Ringraum 8 zwischen dem Hohlzylinder 3 und dem Filterelement 2, der nach oben und unten geöffnet ist. Der Bürstenbesatz 6 liegt mit seinem freien Ende an der die Filteroberseite bildenden Innenseite 2a des Filterelements 2 an und streicht aufgrund der Drehung des Hohlzylinders 3 über diese Filteroberseite, um die dort sich absetzenden Schweb- und Sinkstoffe abzustreifen.

Damit die Innenseite des Filterelements 2 eine glatte Oberfläche bildet, sind die Drähte 9 des Filterelements 2 durch senkrechte Stäbe 10 gehalten, die an der Außenseite der Drähte befestigt sind.

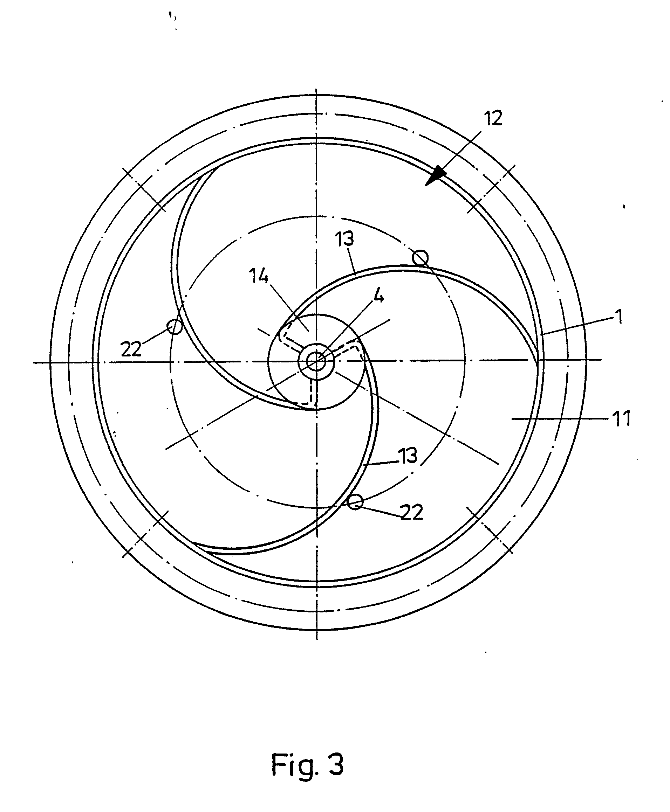

Der Ringraum 8 mündet unten in einen Schlammauffangraum 11, der frei von der Turbulenz der zu filternden Flüssigkeit ist und in dem sich eine Räumvorrichtung 12 dreht. Die Räumvorrichtung 12 weist Arme 13 auf, die von dem unteren, vorstehenden Zentrierbolzen 4a der Achse 4 ausgehen und spiralförmig sich durch den Auffangraum 11 erstrecken (Figur 3). An der Unterseite des Hohlzylinders 3 stehen Stifte 22 vor, die als Drehmitnehmer der Arme 13 dienen. Diese Arme 13 fördern den Schlamm zu einer mittigen Öffnung 14 im Boden des Auffangraumes 11. Von der Öffnung 14 erstreckt sich ein Rohrstutzen 15 nach unten, der zu einer darunter befestigten Abzugspumpe 16 oder Schlamm-Sammelbehälter führt.

Die zu filternden Flüssigkeit, insbesondere Schmutzöle, werden durch den oberen Einlaßstutzen 17 des Gehäuses 1 eingelassen und durch ein oben auf dem Hohlzylinder 3 befestigtes kegelförmiges Blech 18 abgelenkt und in die Ringräume 8 geführt. Die in der zu filternden Flüssigkeit befindlichen Schweb- und Sinkstoffe werden durch den Bürstenbesatz 6 und durch den zwangsgeführten Förderstrom der zu filternden Flüssigkeit nach unten in den Auffangraum 11 befördert. Die gereinigte Flüssigkeit gelangt nach Durchtreten des Filterelementes 2 in einen außen am Filterelement 2 angrenzenden Ringraum 20 und von dort zum Auslaßstutzen 21 des Gehäuses 1.

In einer Alternative bleibt der Hohlzylinder stehen, und das Filterelement dreht sich. Hierbei entstehen dieselben obengenannten Vorteile und Wirkungen. Auch bei diesem Filtersystem ist es vorteilhaft, wenn senkrecht angeordnete Reinigungskämme, die zum Bürstenwendel hin vorstehen, verwendet werden.

## Ansprüche

1. Spaltrohrfilter mit einem hohlzylindrischen Filterelement aus gebogenen Drähten, die auf senkrechten Haltestützen befestigt sind und die zwischen sich waagerechte Spalten bilden, durch die zu filternde Flüssigkeit tritt, wobei die Zylinderinnenwand des Filterelementes die dem Flüssigkeitsstrom zugekehrte Filteroberfläche bildet, die Flüssigkeit vom Innern des Filterelementes nach außen strömt und die dem Flüssigkeitsstrom zugekehrte Filteroberfläche von einer Abstreifvorrichtung überfahrbar ist, **dadurch gekennzeichnet,** daß an der Zylinderinnenwand (2a) eine koaxiale Wendel (5) aus Bürsten anliegt, die sich relativ gegenüber dem Filterelement (2) in einer solchen Richtung dreht, daß die auf und vor der Filteroberfläche (2a) befindlichen Sink- und Schwebestoffe nach unten befördert werden.

2. Spaltrohrfilter nach Anspruch 1, **dadurch gekennzeichnet,** daß die Wendel (5) auf einem koaxialen Hohlzylinder (3) geringeren Durchmessers als der des Filterelementes (2) befestigt ist, der sich relativ zum Filterelement (2) dreht.

3. Spaltrohrfilter nach Anspruch 2, **dadurch gekennzeichnet,** daß an dem unteren Ende der Hohlzylinderachse (4) eine spiralförmig gebogene Arme (13) aufweisende Räumvorrichtung (12) befestigt ist, die in einem unterhalb des Hohzylinders (3) befindlichen Schlammauffangraum (11) gelagert ist, der sich an der Unterseite des Ringraumes (8) zwischen Filterelement (2) und Hohlzylinder (3) anschließt.

4. Spaltrohrfilter nach Anspruch 3, **dadurch gekennzeichnet,** daß die Arme (13) der Räumvorrichtung (12) den Schlamm zum Zentrum des Auffangraumes (11) fördern, wobei im Zentrum eine untere Schlammentnahmeöffnung (14) angeordnet ist.

5. Spaltrohrfilter nach Anspruch 4, **dadurch gekennzeichnet,** daß unterhalb der Entnahmeöffnung eine Abzugspumpe oder Schlammsammelbehälter (16) befestigt ist, damit der Schlamm nicht mit der äußeren Umgebungsluft des Filters in Berührung kommen kann.

6. Spaltrohrfilter nach einem der vorherigen Ansprüche, **dadurch gekennzeichnet,** daß die Bürsteneinheit (5) aus einem oder mehreren Bürstenwendeln (in gleichem Abstand voneinander) mit hoher Steigung besteht.

7. Spaltrohrfilter nach einem der Ansprüche 2 bis 8, **dadurch gekennzeichnet,** daß am jeweiligen senkrecht verlaufenden Stirnstop der Filterelemente Reinigungskämme zur automatischen Reinigung des Bürstenbesatzes vorgesehen sind, die zum Bürstenwendel hin vorstehen und der Kammkörper gleichzeitig zur Fixierung und Einspannung der Filterelemente dient. Bei einem geschlossenen Spaltrohr werden die Reinigungskämme gesondert befestigt.
**dadurch gekennzeichnet,** daß zwischen den Filterelemten Reinigungskämme zu der Bürstenwendel (5) hin vorstehen.

Fig. 1

Fig. 2

Fig. 3